(19) **Europäisches Patentamt**
**European Patent Office**
**Office européen des brevets**

(11) **EP 2 173 010 A1**

(12) **EUROPEAN PATENT APPLICATION**

(43) Date of publication:
**07.04.2010 Bulletin 2010/14**

(51) Int Cl.:
*H01Q 3/26* (2006.01)  *H01Q 1/24* (2006.01)
*G01S 7/40* (2006.01)  *H04B 17/00* (2006.01)

(21) Application number: **08105478.5**

(22) Date of filing: **02.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nokia Siemens Networks OY**
**02610 Espoo (FI)**

(72) Inventors:
• **Ermutlu, Murat**
**00600, Helsinki (FI)**

• **Martikkala, Risto**
**90800, Oulu (FI)**
• **Pallonen, Jorma**
**02400, Kirkkonummi (FI)**

(74) Representative: **Bruglachner, Thomas E.**
**Nokia Siemens Networks GmbH & Co. KG**
**COO RTP IPR / Patent Administration**
**80240 München (DE)**

(54) **Improved probe calibration for an active antenna**

(57)    An antenna array device comprises at least three antenna elements, at least one receiver, at least one transmitter, and a phase measurement device.

The antenna elements are grouped into at least two antenna element pairs. The antenna element pairs is arranged essentially symmetrical about the two phase probes. The antenna element of one antenna element pair is part of another antenna element pair. The receiver is communicatively connected to the phase probes. The transmitter is communicatively connected to the antenna elements. The phase measurement device is provided with the receiver for determining phase differences of the antenna element pairs.

Fig. 1

**Description**

This application relates to antennas. In particular, the application relates to an active antenna array and also to a method for calibrating the active antenna array.

Active antenna arrays comprise groups of individual antennas that are distributed over a certain area and that are orientated in a certain direction. The multiple antennas form a larger antenna array.

A concept of an active antenna array comprises a technology in which one or more radios are connected to multiple antennas of the antenna array. Often, one radio is connected to more than one antenna. The radios and the antenna which are connected to the radios form radio cells. The radios not only operate in a transmission mode but also in a reception mode.

The same antennas can be used for transmitting and for receiving. In the transmission mode, the antennas act as radiators and the entire active antenna array can be seen as one transmitting antenna for electromagnetic radiation. The antenna array has a certain desired radiation pattern characteristic and a certain desired EIRP (effective isotropic radiated power) characteristic.

The EIRP relates to a radiated transmitter power of the antenna array that is multiplied by an isotropic antenna gain of the antenna array in a certain direction. The isotropic antenna gain relates to an antenna array gain that is compared to a hypothetical isotropic radiating antenna.

In contrast, the entire active antenna array can also be viewed as one reception antenna for electromagnetic radiation in the reception mode. Each group of the antennas is attached to one radio for receiving RF (radio frequency) signals. The antenna array has a reception pattern with certain desired characteristics, such as reception sensitivity.

The antenna array has therefore electrical circuits for changing the desired characteristics. The radios together with the electrical circuits for changing the characteristics determine as well as control RF signal phases and signal powers. Most modern radios have means to measure and to control the signal powers accurately enough without a need for a separate feedback system. The measurement of the signal phases is more difficult but without the measurement of the signal phases of the emitted signals, it is more difficult to control of the signal phases for influencing the radiation pattern of the antenna array.

A common way of measuring the signal phase uses a set of directional couplers that are placed at predetermined positions of feed points of the antennas and a set of electrically predetermined length of RF cables. The signals from the directional couplers are then sent back so the transmitter and these are compared with the emitted signal for evaluating the phase difference between the feed point and the output of the transmitter.

One of the goals of the application is to provide characteristic data of an active antenna array and a simplified method of adjusting the desired characteristics of an active antenna.

The present application provides at least two phase probes that can be installed in the near field of an antenna array which has a plurality of antenna elements. The phase probes are assigned to pairs of the antenna elements for measuring signal phases which occur at the antenna elements. The pairs of the antenna elements are arranged essentially symmetrical about the phase probes.

The antenna array can comprise three or more antenna elements and two or more phase probes.

When the phase probes are correctly located and when there is a sufficient number of the phase probes, measurement accuracy of the phase probes can be improved by measuring signals transmitted by radios of the antenna elements using the phase probes and by forming several pairs of the antenna elements. The locations and the number of the measured pairs are selected such that the antenna elements can be grouped into pairs and such that one pair of antenna elements can be compared with another pair.

An antenna array device is provided by the application too. The antenna array device comprises at least three antenna elements, at least one receiver, at least one transmitter, and a phase measurement device.

The at least three antenna elements enable formation of at least two antenna element pairs. The at least two antenna element pairs allow signal phase of one antenna element pair to be compared with signal phase of another antenna element pair. This can provide a complete phase alignment of all antenna elements.

The antenna elements are grouped into at least two antenna element pairs. Each antenna element pair is arranged essentially symmetrical about one of at least two phase-probes. At least one antenna element of the antenna element pair is part of at least another antenna element pair.

The symmetry of antenna element pair about its assigned phase probe allow the phase probe to measure signal phase difference of the antenna element pair without introducing positional errors.

At least one transmitter is communicatively connected to the antenna elements. At least one receiver is communicatively connected to the phase probes. A phase measurement device is provided with the receiver for determining phase differences of the antenna element pairs.

Phase calibration of the antenna array device is done in a DL (down-link) transfer wherein signals are transmitted from at least one antenna element to a User Equipment (UE) which is provided with a phase probe. The UE may also comprise a terminal that is capable of communicating with the antenna array device.

The transmitter is intended for sending RF (radio frequency) signals to the antenna elements. The RF signals can carry data packets or voice data. The transmitter may receive the signals from a core network of a communication network.

The antenna elements convert the sent RF signals to electromagnetic radiation. The phase probes receive the radiated signals and provide them to the receiver. The receiver then sends the transmitted signals to the phase measurement device for measuring signal phases. The receiver may also convert a format of the signals according to the needs of the phase measurement device.

The antenna array device can comprise a memory device for storing antenna-unit phase differences. A phase adjustment device later uses the stored antenna-unit phase differences to adjust signal phases during operation of the antenna array device.

The antenna array device can also comprise a switch that selectively connects the different phase probes to the receiver.

The application also provides an antenna array device for emitting RF signals that are phase adjusted. The antenna array device comprises at least three antenna elements, at least one transmitter, at least one phase adjustment device, and a memory device.

The antenna elements are grouped into at least two antenna element pairs. The antenna element pairs are arranged essentially symmetrical about one of at least two phase probes. At least one antenna element of the antenna element pair is part of at least another antenna element pair.

The transmitter is communicatively connected to the antenna elements. The phase adjustment device is communicatively connected to one or more of the transmitters. The memory device stores antenna-element phase differences.

The transmitter sends an RF signal to the antenna element. The RF signal has a signal phase that is adjusted by the phase adjustment device. The phase adjustment device can use the stored antenna-element phase differences for the adjustment.

The antenna-element phase differences can include characteristic phase differences of the antenna elements, which are phase differences that are determined with respect or with reference to a first antenna element. The characteristic phase differences can be used to align signal phases of the antenna element to the first antenna element.

The application also provides an antenna array device that is communicatively connected to the phase probes. A phase measurement device can be provided with the receiver for determining phase differences of the antenna element pairs.

The application provides a BTS (Base Transceiver Station) of a communication network that comprises the above mentioned antenna array device.

A method for measuring signal phase differences of antenna elements of an antenna array device comprises the step of providing a first antenna element and a second antenna element essentially symmetrical about a first phase probe. The symmetry allows the first phase probe to measure signal phases of emitted signals of the first antenna element and of the second antenna element without introducing measurement errors due to position of the first phase probe.

Likewise, the method also comprises the step of providing a third antenna element and a second phase probe such that the second antenna element and the third antenna element are provided essentially symmetrical about the second phase probe.

A first pair signal is afterward emitted via the first antenna element and via the second antenna element. The first antenna element first pair signal is received via the first phase probe and the second antenna element first pair signal is also received via the first phase probe. A first-pair transmission phase difference between the first antenna element first pair signal and the second antenna element first pair signal is then measured.

The first-pair transmission phase difference describes a signal phase difference between the first antenna element and the second antenna element.

In a similar way, the method also comprises the step of emitting a second pair signal via the second antenna element and the third antenna element. The second antenna element second pair signal is received via the second phase probe and the third antenna element second pair signal is received via the second phase probe. A second-pair transmission phase difference between the second antenna element second pair signal and the third antenna element second pair signal is afterward measured.

The second-pair transmission phase difference describes a signal phase difference between the second antenna element and the third antenna element.

The method can comprise the step of calculating a second antenna element characteristic signal phase using the first pair transmission phase-difference. This enables the second antenna element characteristic signal phase to be calculated with respect to the first antenna element.

The second antenna element characteristic signal phase can be stored in a memory device. The storage allows the second antenna element characteristic signal phase to be used later by the phase adjustment device.

Similarly, the method can also comprise the step of calculating a third antenna element characteristic signal phase using the first pair transmission phase-difference and the second pair transmission phase-difference. This allows the third antenna element characteristic signal phase to be calculated with respect to the first antenna element.

The third antenna element characteristic signal phase can likewise be stored in the memory device. The storage also allows the third antenna element characteristic signal phase to be used later by the phase adjustment device.

A method of transmitting phase-calibrated signals is provided by the application. The method comprises the steps of emitting a first signal via a first antenna element, a second calibrated signal via a second antenna element, and a third calibrated signal via the third antenna element.

The second calibrated signal comprises a second signal that is phase adjusted using the second antenna element characteristic signal phase. The third calibrated signal comprises a third signal that is phase adjusted using the third antenna element characteristic signal phase.

The adjustments are intended to eliminate the signal phase difference of the second antenna element with respect to the first antenna element and to eliminate the signal phase difference of the third antenna element with respect to the first antenna element. In this manner, signal phase differences and hence signal interferences among the first antenna element, the second antenna element, and the third antenna element are eliminated or are reduced.

A method of transmitting desired phased signals is provided by the application. The method comprises the steps of emitting a first signal via a first antenna element, a second desired signal via the second antenna element, and a third desired signal via the third antenna element.

The second desired signal comprises a second signal that is phase adjusted using a second antenna element characteristic signal phase and a second antenna element desired signal phase.

Similarly, the third desired signal comprises a third signal that is phase adjusted using a third antenna element characteristic signal phase and a third antenna element desired signal phase.

The second antenna element desired signal phase adjustment and the third antenna element desired signal phase adjustment are intended to produce desired phase signals that produce a radiation beam with a desired illumination pattern.

In a further aspect of the application, the use of the several phase probes, instead of one single phase-probe, reduces distances between the phase probes and the measured antenna elements. Large distances between the phase probes and the measured antenna elements, especially in a large antenna array, can reduce its measurement accuracy.

The application provides methods and devices that are cost effective and are accurate. Parts used for the phase calibration are inexpensive and are easy to manufacture. If the phase calibration would use expensive digital electrical parts, the cost saving of the application is believed to be significant. The phase calibration is applicable for an active antenna, such as an active BTS (base transmitter station) antenna of a mobile radio network.

When the antenna element is small enough, the radio that is attached to the small antenna element can be used for calibrating the antenna. The small antenna element may include one or two antennas. Most radios usually have a means, called a RF (Radio Frequency) loop to transmit a signal in its receiving signal band. The same means also enables a receiver calibration.

It thus believed that these methods improve accuracy and reliability of the phase measurement. More unknown errors can be calculated out of a final calibration result and one failure in a calibration system may not paralyze completely the antenna array.

Fig. 1    illustrates a single-column antenna array of a BTS (base transceiver station) of a communication network,

Fig. 2    illustrates a two-column antenna array of the BTS,

Fig. 3    illustrates a three-column antenna array of the BTS,

Fig. 4    illustrates a calibration unit with a probe of the BTS, and

Fig. 5    illustrates a further calibration unit with several probes of the BTS.

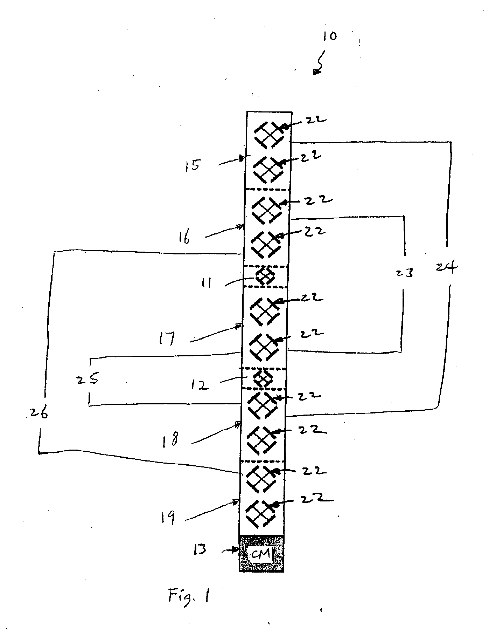

Figs. 1 to 5 have similar parts. The similar parts have similar part reference numbers or similar names. A description of the similar parts is thus included by reference.

Fig. 1 depicts a top view of a single-column antenna array 10 of a BTS (base transceiver station) of a communication network. The BTS and the communication network are not shown in Fig. 1. A first probe 11 and a second probe 12 are placed in the single-column antenna array 10. A common module 13 is connected to the single-column antenna array 10.

The single-column antenna array 10 comprises a plurality of antenna sub-arrays. The plurality of the antenna sub-arrays comprises a first antenna sub-array 15, a second antenna sub-array 16, a third antenna sub-array 17, a fourth antenna sub-array 18, and a fifth antenna sub-array 19. The antenna sub-array 15, 16, 17, 18, and 19 each comprises two antennas 22.

A first sub-array radio is connected to the antenna sub-array 15, to a first base-band processing unit and to the common module 13. The first sub-array radio and the first sub-array base-band processing unit are not shown in Fig. 1. Transmission parts of the first sub-array radio are connected to the first base-band processing unit. The first sub-array base-band processing unit is connected to the CN. The first sub-array radio includes a first sub-array radio transceiver.

In the same way, further sub-array radios are connected to the antenna sub-arrays 16, 17, 18, and 19 and to further sub-array base-band processing units that are connected to the further sub-array radios. The further sub-array radios include further sub-array radio transceivers.

A first calibration radio is connected to the first probe 11 whilst a second calibration radio is connected to the second probe 12. The first and the second calibration radios are not shown in the Fig. 1. The first and the second calibration radios are connected to the common module 13.

The common block 13 includes a phase adjustment block and a phase measurement block. The phase adjustment block and the phase measurement block are not shown in the Fig. 1. The phase adjustment block is also called a delay adjustment block or a phase adjustment device. The phase measurement block is also called a delay measurement block, a phase estimation block, or a phase measurement device.

The antenna sub-arrays 15, 16, 17, 18, and 19 are positioned in a single plane and they are also arranged adjacently in a column. The single-column antenna array 10 is placed next to the second antenna sub-array 16 that is positioned next to the third antenna sub-array 17. The third antenna sub-array 17 is arranged next to the fourth antenna sub-array 18. The fifth antenna sub-array 19 is placed next to the fourth antenna sub-array 18.

The antenna sub-arrays 15, 16, 17, 18, and 19 are arranged such that they can form groups of two in which the respective pairs have points of symmetry. The groups of two are also called pairs. The points of symmetry are located in spaces that allow for placement of the first probe 11 or the second probe 12.

The first probe 11 is placed at a first centre point. A first group 23 that comprises the second antenna sub-array 16 and the third antenna sub-array 17 is symmetrical about the first centre point. The first centre point also serves as a point of symmetric for a second group 24 that comprises the first antenna sub-array 15 and the fourth antenna sub-array 18.

In a similar manner, the second probe 12 is placed at a second centre point. A third group 25 that comprises the third antenna sub-array 17 and the fourth antenna sub-array 18 is symmetrical about the second centre point. A fourth group 26 that comprises the second antenna sub-array 16 and the fifth antenna sub-array 19 is also symmetrical about the second centre point.

In a generic sense, the single-column antenna array 10 is a form of a duplex antenna that can be used in a GSM (Global System for Mobile communication) communication network or in a WCDMA (Wideband Code Division Multiple Access) communication network. The single-column antenna array 10 can also be used as main antenna or as a diversity antenna in a LTE (Long Term Evolution) communication network. A receiver and a transmitter phase alignment of the duplex antenna can be corrected.

The single-column antenna array 10 can comprises more than three antenna elements and more than two calibration probes. The antenna elements include at least one antenna sub-array unit 15, 16, 17, 18, or 19. The antenna sub-array 15, 16, 17, 18, or 19 comprises at least one antenna 22.

Although the first group 23 and the second group 24 are symmetrical about the first centre point whereas the third group 25 and the fourth group 26 are symmetrical about the second centre point, the word symmetrical does not mean that an absolute symmetrical must be achieved.

Advantageously, the points of symmetry allows the first probe 11 and the second probe 12 to measure signal phases of the antenna sub-array 15, 16, 17, 18, or 19 of the same group without introducing on of positional error. This will be explained in the further description.

The communication network offers mobile telecommunication services for a Mobile Station (MS). The services include voice and data services or packet data services. The MS is also called a UE (User Equipment).

A core network (CN) of the communication network utilizes the BTS for wireless or radio communication. The CN provides circuit-switched transmission of voice signals and packet-switched transmission of data packet signals.

The signals can be in a UL (up-link) transfer or in a DL (down-link) transfer. In the UL transfer, the signals are transferred from the UE to the single-column antenna array 10 in a RX (receiver) band. The RX band is also called UL band. In the DL transfer, the signals are transmitted from the single-column antenna array 10 to the UE in a TX (transmitter) band. The TX band is also called a DL band.

The BTS receives signals from the MS via the single-column antenna array 10 and sends the received signals to the CN. The BTS also sends signals from the CN to the MS via the single-column antenna array 10. The BTS services the MS that are within its geographical service area or cell.

The MS comprises a mobile station subscriber or a user, together with a terminal that is capable of communicating with the communication network. The terminal includes a mobile phone, or a computer that is connected to a mobile phone.

The antennas 22 are described by Thomas Edison in US 465 971. The antennas 22 are intended to produce or to receive a radiation that has certain characteristics, such as directivity, radiation pattern, intensity, or amplitude. The radiation refers to electromagnetic radiation. Changes in spatial relationships of the antennas 22 can change or can influence these properties. The radiation can carry an electrical signal. The radiation is also called radio waves or RF energy.

The single-column antenna array 10 can operate in a transmission mode or in a reception mode. In other words, the single-column antenna array 10 has a duplex mode of operation.

In the transmission mode, the antenna sub-arrays 15, 16, 17, 18, and 19 receive RF signals from the sub-array radios. The antenna sub-arrays 15, 16, 17, 18, and 19 convert the RF signals to radiations for transmitting to the UE. The radiations are in a transmission signal band of the BTS. The RF signals carry voice data or data packets and they can be in the form electrical currents.

The radiations of the antenna sub-arrays 15, 16, 17, 18, and 19 combine to form a combined radiation with a particular illumination pattern and with a particular transmission range. The illumination pattern has different amplitudes or different intensities at various locations of the illumination pattern.

A radiation with a signal phase shift can interfere with another radiation to reduce or to increase its combined radiation intensity at a certain location in the transmission range. The signal phase shift is also called a time delay or a phase difference. The radiation shift is a form of a signal shift.

Several factors, such as environmental parameters, as in snow, can shift the radiation phase and the emitted RF power. Other factors include probe location manufacturing tolerances, antenna location manufacturing tolerances, corrosion, and repeatability of the location of the electrical centre of symmetry of an antenna sub-array under thermal stress.

In the reception mode, the antenna sub-arrays 15, 16, 17, 18, and 19 receive radiations from the UE. The antenna sub-arrays 15, 16, 17, 18, and 19 convert the received radiation to RF signals for transmitting to its respective sub-array radios. The radiations are in a reception signal band of the BTS.

The sub-array radio transceivers receive RF signals from the antenna sub-arrays 15, 16, 17, 18, and 19, convert a format of the received RF signals to a digital base-band format such that the RF signals can be understood by the common module 13, and send the base-band format signals to the common module 13.

The sub-array radio base-band processing units receive signals for the UE from the CN. The sub-array radio base-band processing units modulate the received signals onto a carrier signal and send the modulated signals to the sub-array radio transceivers for sending to the antenna sub-array 15, 16, 17, 18, or 19.

The common module 13 performs detection of signal phase differences as well as adjustment of signal phases for the UL transfer and for the DL transfer.

The common module 13 can adjust parameters of sub-array radios when the single-column antenna array 10 is in transmission mode. The radio parameters include delay of RF signals that are sent by the sub-array radios. When the single-column antenna array 10 is in the reception mode, parameters of the common module 13 can be adjusted. The common module parameters include delay of RF signals that are received by the single-column antenna array 10.

The phase detection block of the common module 13 receives the digitalised signals from the antenna sub-array 15, 16, 17, 18, or 19 and it determines or estimates the signal phase of the digitalised signals. The phase detection block can determine the signal phase by comparing the received antenna sub-array digitalised signals with as reference signal. The measured signal phase can be stored in a memory device for later use by the phase adjustment block during operation of the antenna sub-array 15, 16, 17, 18, or 19.

The phase adjustment block of the common module 13 can change the signal phase using digital algorithms. The phase adjustment block uses the sub-array radios to change delays of the RF signals that are sent from the sub-array radios to its respective antenna sub-arrays 15, 16, 17, 18, and 19.

The phase adjustment block can also change a delay of the received digitalised signals using digital techniques. The received digitalised signals of the antenna sub-array 15, 16, 17, 18, or 19 are combined to form a combined digitalised signal. A received digitalised signal with a signal phase shift can interfere with another received digitalised signal to reduce or increase its combined signal strength. The phase shift is a form of the signal shift. The phase adjustment block can reduce or eliminate the interference by adjusting the delay of the received digitalised signal.

Moreover, the common module 13 co-ordinates functions of the BTS. The functions comprise selectively turning on or to selectively turning off the antenna sub-arrays 15, 16, 17, 18, and 19. The antenna sub-arrays 15, 16, 17, 18, and 19 can transmit or can receive a radiation when they are turned on. They do not receive the radiation when they are turned off.

The first probe 11 and the second probe 12 are a type of an antenna with a reduced size. The reduced size prevents the first probe 11 and the second probe 12 from affecting a performance of the single-column antenna array 10. They are intended to act as phase receivers and as test signal sources. The phase receivers receive radiations from the antenna sub-arrays 15, 16, 17, 18, and 19 and they convert the received radiations to RF signals for sending to the common module 13. The test signal sources receive test RF signals from calibration radios and convert the test RF signals to radiations for sending to the antenna sub-arrays 15, 16, 17, 18, and 19.

The first the second calibration radios function in a manner that is similar to the sub-array radios. The first the second calibration radios also has parts that are similar to the parts of the sub-array radios. The similar parts function in a similar manner.

Methods of calibrating signal phases of the single-column antenna array 10 to achieve a desired illumination pattern of the single-column antenna array 10 are described below. The calibration step comprises a measurement step.

The antenna sub-arrays 15, 16, 17, 18, and 19 are firstly grouped into pairs. Signal phase differences of the pairs of the antenna sub-arrays 15, 16, 17, 18, and 19 are then measured. After this, signal phase differences of each antenna sub-array 15, 16, 17, 18, or 19 with respect to one antenna sub-array 15, 16, 17, 18, or 19 are determined.

The determined signal phase differences are afterward stored in the memory device for later use by the phase adjustment block. The determined signal phase difference represents a characteristic signal phase of the antenna sub-array 15, 16, 17, 18, or 19.

During operation, the calibrated antenna sub-arrays 15, 16, 17, 18, and 19 emit or receive signals with adjusted signal phases. The phase adjustment block adjusts the signal phases using the determined signal phase differences.

The emitted signals or received signals may include desired signal phase adjustments to produce a desired illumination pattern or a desired reception pattern.

A first method of calibrating the transmission mode of the first active antenna array is shown below.

The first method includes the step of identifying pairs of the antenna sub-arrays 15, 16, 17, 18, and 19. The pairs are symmetrical about the first probe 11 or the second probe 12.

After this, a first pair phase-difference between the antenna sub-arrays 16 and 17 of the first group 23 is measured or is determined. Similarly, second, third, and fourth pair phase-differences between the antenna sub-arrays 15, 16, 17, 18, or 19 of the second group 24, the third group 25, and the fourth group 26 are determined.

Then, the determined pair phase-differences are used to calculate phase differences of the antenna sub-arrays 15, 16, 17, and 18 with respective to the antenna sub-array 19. The calculated antenna sub-array phase-differences are later used to adjust signal phases of the antenna sub-arrays 15, 16, 17, and 18.

During a start-up of the single-column antenna array 10 or during a low activity period of the single-column antenna array 10, the common module 13 turns off the antenna sub-arrays 15, 16, 17, 18, and 19.

Radiation phase differences of the pairs of the antenna sub-arrays 15, 16, 17, 18, and 19 are then determined.

The determination comprises the step of turning on the first pair 23 of the antenna sub-arrays 16 and 17 by the common module 13. The sub-array radios of the antenna sub-arrays 16 and 17 later sends calibration RF signals to the antenna sub-arrays 16 and 17. The calibration RF signal comprises a binary number sequence for easier identification. The sub-array radios of the antenna sub-arrays 16 and 17 send out the calibration RF signals at the same time. The antenna sub-arrays 16 and 17 afterward convert the calibration RF signals to calibration radiations.

The first probe 11 then receives the calibration radiations, converts the calibration radiations to received probe RF signals, and sends the received probe RF signals to the first calibration radio. The first calibration radio receives the probe RF signals, changes a format of the probe RF signals to a digital base-band format, and sends the base-band format probe signals to the common module 13.

The control module 13 is aware of the calibration RF signal that the sub-array radio sent out and of the received probe-RF signals that the first calibration radio receives. The control module 13 then determines an ERPD16_17 (electromagnetic radiation signal phase of the antenna sub-array 16 with respect to electromagnetic radiation signal of the antenna sub-array 17) based on the calibration RF signal and the received probe-RF signals using digital techniques.

In a special embodiment, the sub-array radios of the antenna sub-arrays 16 and 17 send out the calibration RF signals with respect to a reference signal at different times instead of the same time. The control module 13 is aware of the calibration RF signals, of the received probe-RF signals, and of the reference signal.

After this, the control module 13 determines signal phases of the antenna sub-arrays 16 and 17 with respect to the reference signal using digital techniques. The control module 13 then determines the ERPD16_17 using the determined signal phases of the antenna sub-arrays 16 and 17.

After this, the common module 13 turns off the first pair 23 of the antenna sub-arrays 16 and 17.

In a manner that is similar to the above description, an ERPD15_18 (electromagnetic radiation signal phase of the antenna sub-array 15 with respect to electromagnetic radiation signal of the antenna sub-array 18) is determined using measurements from the first probe 11. The antenna sub-array 15 and the antenna sub-array 18 are parts of the second pair 24.

Afterwards, an ERPD17_18 (electromagnetic radiation signal phase of the antenna sub-array 17 with respect to electromagnetic radiation signal of the antenna sub-array 18) is derived using measurements from the second probe 12. The antenna sub-array 17 and the antenna sub-array 18 are parts of the third pair 25.

An ERPD16_19 (electromagnetic radiation signal phase of the antenna sub-array 16 with respect to electromagnetic radiation signal of the antenna sub-array 19) is later determined using measurements from the second probe 12. The antenna sub-array 16 and the antenna sub-array 19 are parts of the fourth pair 26.

The electromagnetic radiation phase differences of the antenna sub-arrays 15, 16, 17, and 18 with respect to the antenna sub-array 19 are then calculated from the ERPD16_17, the ERPD15_18, the ERPD17_18, and the ERPD16_19.

An ERPD15_19 (electromagnetic radiation signal phase of the antenna sub-array 15 with respective to electromagnetic radiation signal of the antenna sub-array 19) is afterward calculated, as shown below.

$$ERPD15\_19 \; = \; ERPD15\_18 \; - \; ERPD17\_18 \; - \; ERPD16\_17 \; + \; ERPD16\_19 \qquad (1)$$

The ERPD16_19 (electromagnetic radiation signal phase of the antenna sub-array 16 with respect to electromagnetic radiation signal of the antenna sub-array 19) is determined earlier.

An ERPD17_19 (electromagnetic radiation signal phase of the antenna sub-array 17 with respect to electromagnetic radiation signal of the antenna sub-array 19) is later calculated, as depicted below.

$$ERPD17\_19 \; = \; - \; ERPD16\_17 \; + \; ERPD16\_19 \qquad (2)$$

An ERPD18_19 (electromagnetic radiation signal phase of the antenna sub-array 18 with respect to electromagnetic radiation signal of the antenna sub-array 19) is then calculated, as shown below.

$$ERPD18\_19 \; = \; - \; ERPD17\_18 \; - \; ERPD16\_17 \; + \; ERPD16\_19 \qquad (3)$$

The ERPD15_19, the ERPD16_19, the ERPD17_19, and the ERPD18_19 are then stored in the memory device for later use by the phase adjustment block during operation of the antenna sub-arrays 15, 16, 17, and 18.

The common module 13 then use the ERPD15_19, the ERPD16_19, the ERPD17_19, and the ERPD18_19 to adjust the delays of the respective sub-array radios of the antenna sub-arrays 15, 16, 17, and 18 to eliminate the phase differences of the antenna sub-arrays 15, 16, 17, and 18 with respective to the antenna sub-array 19.

A second method of calibrating the transmission mode of the first active antenna array is depicted below.

The second method comprises the step of determining or of measuring a first pair phase-difference of a first pair. The first pair comprises a first antenna sub-array and a second antenna sub-array. A phase of the second antenna sub-array with respect to the first antenna sub-array is later adjusted until the first pair phase-difference is reduced or is eliminated.

After this, a second pair phase-difference of a second pair is determined. The second pair comprises the second antenna sub-array and a third antenna sub-array. The phase of the third antenna sub-array with respect to the second antenna sub-array is then adjusted until the second pair phase-difference is reduced or is eliminated.

In similar way, other pair phase-differences are reduced or eliminated.

The second method comprises steps of reducing or of eliminating radiation phase of the antenna sub-arrays 15, 16, 17, and 18 with respective to the antenna sub-array 19.

The steps includes turning off the antenna sub-arrays 15, 16, 17, 18, and 19 during a start-up of the single-column antenna array 10 or during a low activity period of the single-column antenna array 10 by the common module 13.

The common module 13 afterward turns on the fourth pair 26 of the antenna sub-arrays 16 and 19. The sub-array radios of the antenna sub-arrays 16 and 19 later send calibration RF signals to the antenna sub-arrays 16 and 19. The antenna sub-arrays 16 and 19 afterward convert the calibration RF signals to calibration radiations.

The second probe 12 afterward receives the calibration radiations, converts the calibration radiations to received probe RF signals, and sends the received probe RF signals to the second calibration radio. The second calibration radio changes a format of the probe RF signals to the digital base-band format and sends the base-band format probe signals to the common module 13.

The common module 13 then determines an ERPD16_19 (electromagnetic radiation phase difference of the antenna sub-array 16 with respect to the antenna sub-array 19) based on the base-band format probe signals.

Then, the phase adjustment block of the common module 13 adjusts a radiation phase of the antenna sub-array 16 to reduce a value of the ERPD16_19 is zero or is close to zero. The adjustment is via changing a delay of a sub-array radio of the antenna sub-array 16.

Thus, the radiation phase of the antenna sub-array 16 with respective to the antenna sub-array 19 is reduced or is eliminated.

The required adjustment is stored in the memory device for use during operation of the antenna sub-array 16.

In a similar manner, a radiation phase of the antenna sub-array 17 with respective to the antenna sub-array 19 is reduced or is eliminated.

The probe 1 contributes to a determination of an ERPD17_16 (electromagnetic radiation phase difference of the antenna sub-array 17 with respect to the antenna sub-array 16). The electromagnetic radiation phase of the antenna sub-array 17 is then adjusted by the common module 13 until a value of the ERPD17_16 is zero or is close to zero.

Later, a radiation phase of the antenna sub-array 18 with respective to the antenna sub-array 19 is reduced or is eliminated.

The common module 13 uses the first probe 11 to contribute to a determination of an ERPD18_17 (electromagnetic radiation phase difference of the antenna sub-array 18 with respect to the antenna sub-array 17). The electromagnetic radiation phase of the antenna sub-array 18 is then adjusted by the common module 13 until the value of ERPD18_17 is zero or is close to zero.

Afterwards, an electromagnetic radiation phase of the antenna sub-array 15 with respective to the antenna sub-array 19 is hence reduced or is eliminated.

The common module 13 uses the second probe 12 to contribute to a determination of an ERPD15_18 (electromagnetic radiation phase difference of the antenna sub-array 15 with respect to the antenna sub-array 18). The electromagnetic radiation phase of the antenna sub-array 15 is then adjusted by the common module 13 until a value of the ERPD15_18 is zero or is close to zero.

In this way, the electromagnetic radiation phase differences of the antenna sub-array 15, 16, 17, and 18 with respect to the antenna sub-array 19 are adjusted to have a zero value or to have a close to zero value.

A method of calibrating the reception mode of the first active antenna array is described below.

The calibration comprises steps of sending calibration electromagnetic radiation by the first probe 11 or the second probe 12 to the antenna sub-arrays 15, 16, 17, 18, and 19. The calibration electromagnetic radiation is received by the antenna sub-arrays 15, 16, 17, 18, and 19, which then send the received signals to the common module 13 for determining or for measuring pair phase differences.

The common module 13 later reduces or eliminates phase shifts of the received signals of the antenna sub-arrays 15, 16, 17, and 18 with respect to the received signal of the antenna sub-array 19. The reduction or elimination is by adjusting the phase shifts of the received signals.

The common module 13 initially turns on the antenna sub-arrays 15, 16, 17, 18, and 19 during a start-up phase of the single-column antenna array 10 or during a low activity phase of the single-column antenna array 10.

Then, a phase difference of the received signal of the antenna sub-arrays 16 with respect to the received signal of the antenna sub-array 19 is reduced or is eliminated.

The second probe 12 receives a calibration RF signal from the second calibration radio. It converts the calibration RF signal to a calibration electromagnetic radiation. The antenna sub-arrays 16 and 19 receive the calibration electromagnetic radiation and it convert the calibration electromagnetic radiation to received signals for sending to the common module 13. The antennas sub-arrays 16 and 19 are symmetrical about the second probe 12.

The common module 13 is aware of the second calibration radio sending out the calibration RF signal and of the antenna sub-arrays 16 and 19 receiving the calibration electromagnetic radiation. The common module 13 afterward determines a RFPD16_19 (RF signal phase of the antenna sub-array 16 with respect to RF signal of the antenna sub-array 19) based on the sent calibration RF signal and the received calibration electromagnetic radiation using digital techniques.

The phase adjustment block of the common module 13 then adjusts a value of the RFPD16_19 to a zero value or to a value that is close to zero. The value of the RFPD16_19 is changed by increasing or by decreasing a delay of the received signal of the antenna sub-array 16.

The required adjustment is then stored in the memory device for later use by the phase adjustment block during operation of the antenna sub-array 16.

In a similar manner, a phase difference of the received signal of the antenna sub-array 17 with respect to the received signal of the antenna sub-array 19 is then reduced or is eliminated.

The common module 13 measures a RFPD17_16 (RF signal phase of the antenna sub-array 17 with respect to RF signal of the antenna sub-array 16). The antenna sub-arrays 17 and 16 receive signals from the first probe 11. Later, a delay of the received signal of the antenna sub-array 17 is adjusted by the common module 13 until a value of the RFPD17_16 is zero or is close to zero.

Later, a phase difference of the received signal of the antenna sub-array 18 with respect to the received signal of the antenna sub-array 19 is then reduced or is eliminated.

A RFPD18_17 (RF signal phase of the antenna sub-array 18 with respect to RF signal of the antenna sub-array 17) is measured by the common module 13. The antenna sub-arrays 18 and 17 receive signals from the second probe 12. A delay of the received signal of the antenna sub-array 18 is adjusted by the common module 13 until a value of the RFPD18_17 is zero or is close to zero.

Then, a phase difference of the received signal of the antenna sub-array 15 with respect to the received signal of the antenna sub-array 19 is then reduced or is eliminated.

The common module 13 derives a RFPD15_18 (RF signal phase of the antenna sub-array 15 with respect to RF signal of the antenna sub-array 18). The antenna sub-arrays 15 and 18 receive signals from the first probe 11. A delay of the received signal of the antenna sub-array 15 is adjusted by the common module 13 until a value of the RFPD15_18 is zero or is close to zero.

Thus, the reception mode of the first active antenna array is calibrated.

The methods are fairly inexpensive and easy to implement.
The methods enable correct adjustment of the antenna sub-array phases so that the single-column antenna array 10 can achieve a higher desired directivity and a desired radiation pattern.

The antenna sub-arrays 15, 16, 17, 18, and 19 may have parts with imperfections that generate signal shifts. Environments surround these parts may also generate the signal shifts. Moreover, properties of these parts may also change over time and produce the signal shifts. These signal shifts can be correctly adjusted using these methods.

The methods provide a way to compare one antenna element of a pair with another antenna element of the pair. That is, a signal phase of one antenna element is matched with a signal phase of another antenna element.

In a generic sense, the methods can be used for calibrating signal phase of an active antenna array in different frequency domains and different time domains.

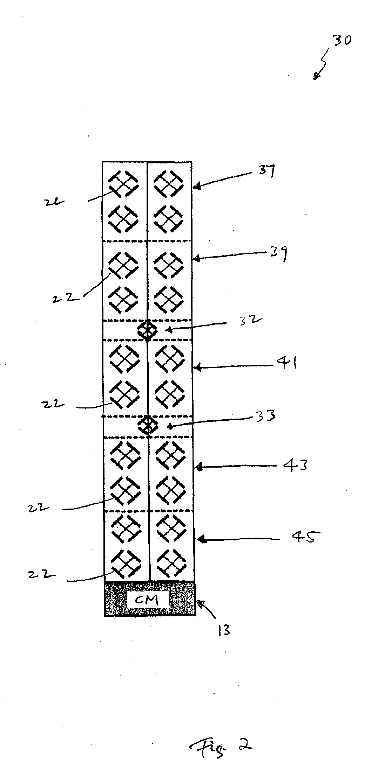

Fig. 2 depicts a two-column antenna array 30 of the BTS. The two-column antenna array 30 has a first probe 32 and a second probe 33. The common module 13 of Fig. 1 is connected to the two-column antenna array 30.

The two-column antenna array 30 includes a plurality of antenna sub-arrays that comprises a first antenna sub-array 37, a second antenna sub-array 39, a third antenna sub-array 41, a fourth antenna sub-array 43, and a fifth antenna sub-array 45.

The antenna sub-arrays 37, 39, 41, 43, and 45 are arranged adjacently in a vertical column. The antenna sub-array 37 is placed next to the antenna sub-array 39. The antenna sub-array 41 is positioned next to the antenna sub-array 39 and it is located next to the antenna sub-array 43. The antenna sub-array 43 is placed next to the antenna sub-array 45.

Each individual antenna sub-array 37, 39, 41, 43, or 45 comprises four antennas 22 that are arranged in two horizontal rows and in two vertical columns.

The two-column antenna array 30 provides another embodiment of an active antenna array for signal phase calibration.

Methods of calibrating signal phases of the two-column antenna array 30 are similar to the above-mentioned methods of calibrating the signal phases of the single-column antenna array 10 of Fig. 1.

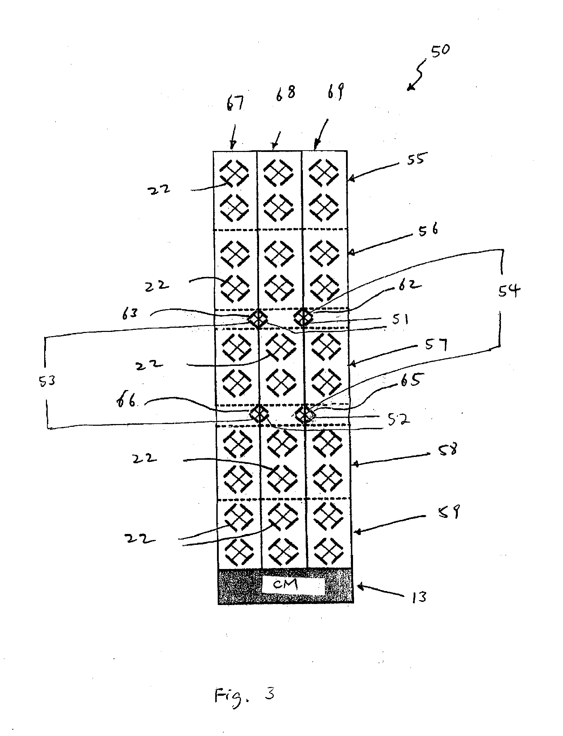

Fig. 3 depicts a three-column antenna array 50 of the BTS. The three-column antenna array 50 has a plurality of probes and a plurality of the antennas 22. The common module 13 of Fig. 1 is connected to the three-column antenna array 50.

An arrangement of the antennas 22 and the probes supports a vertical signal phase alignment and a horizontal signal phase alignment.

The antennas 22 are included in a plurality of vertical antenna sub-arrays that comprises a first antenna sub-array 55, a second antenna sub-array 56, a third antenna sub-array 57, a third antenna sub-array 58, and a fifth antenna sub-array 59.

The antenna sub-arrays 55, 56, 57, 58, and 59 are arranged adjacently in a vertical column. The first antenna sub-array 55 is placed next to the second antenna sub-array 56 that is positioned next to the third antenna sub-array 57. The fourth antenna sub-array 58 is placed next to the third antenna sub-array 57 whilst the fifth antenna sub-array 59 is provided next to the fourth antenna sub-array 58.

Each individual antenna sub-array 55, 56, 57, 58, or 59 comprises six antennas 22 that are arranged in two horizontal adjacent rows and three vertical adjacent columns such that the antennas 22 of the antenna sub-arrays 55, 56, 57, 58, and 59 form ten horizontal adjacent rows and three vertical adjacent columns. The three vertical columns comprise a first vertical column 67, a second vertical column 68, and a third vertical column 69.

The plurality of probes comprises a probe 62, a probe 63, a probe 65, and a probe 66.

A first horizontal pair 51, which comprises the probe 62 and the probe 63, is placed in between the antenna sub-array 56 and the antenna sub-array 57. The antenna sub-array 56 and the antenna sub-array 57 are symmetrical about the first horizontal pair 51. Likewise, a second horizontal pair 52, which comprises the probe 65 and the probe 66, is located in between the antenna sub-array 57 and the antenna sub-array 58. The antenna sub-array 57 and the antenna sub-array 58 are symmetrical about the second horizontal pair 52.

The probe 63 is placed vertically on top of the probe 66 thereby forming a first vertical pair 53. The first column 67 and the second column 68 are symmetrical about the first vertical pair 53.

Similarly, the probe 62 is positioned vertically on top of the probe 65 thereby forming a second vertical pair 54. The second column 68 and the third column 69 are symmetrical about the second vertical pair 54.

The first horizontal pair 51 and the second horizontal pair 52 provide for the vertical signal phase alignment. The first horizontal pair 51 and the second horizontal pair 52 allow the signal phases of the antenna sub-arrays 55, 56, 57, 58, and 59 to be aligned. Correspondingly, the first vertical pair 53 and the second vertical pair 54 provide for the horizontal signal phase adjustments. The first vertical pair 53 and the second vertical pair 54 enable the signal phases of the first column 67, the second column 68, and the third column 69 to be aligned.

Methods of calibrating signal phases of the three-column antenna array 50 are similar to the above-mentioned methods of calibrating the signal phases of the single-column antenna array 10 of Fig. 1.

It is believed that it is possible to form a phase measurement set of at least three column antennas provide a measuring centre column antenna and column antennas for pair comparison of signal phases in a horizontal direction. Single column antenna does not need phase adjustment in the horizontal direction. The at least three column antennas use probes that are centrally located in the middle of the column antennas for phase adjustment.

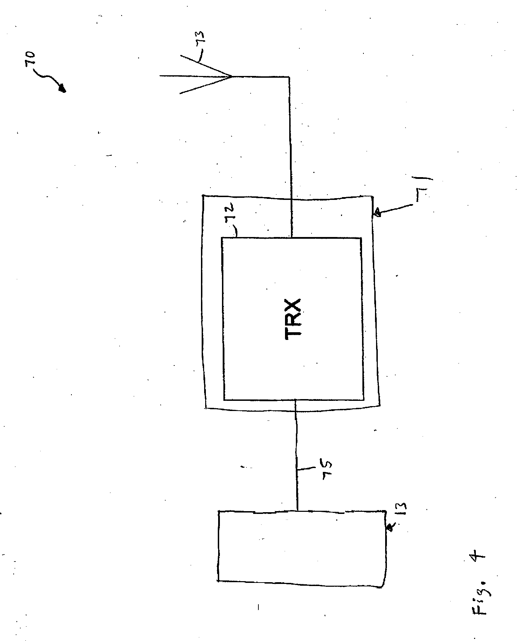

Fig. 4 shows a calibration unit 70, which comprises a probe 73 of the BTS.

The probe 73 is connected to a calibration radio 71, which includes a calibration transceiver 72. The calibration transceiver 72 is connected to the common module 13 of Fig. 1 by a digital serial bus 75. The calibration radio 71 includes a RF loop that is not shown in the Fig. 4.

The probe 73 is intended for signal phase calibration. The probe 73 transmits an UL (up-link) signal in a RX (receiver) band of the BTS that is intended for receiving by a BTS antenna, such as the first column antenna array 10 of Fig. 1 and receives a DL (down-link) signal in a TX (transmitter) band of the BTS from the BTS antenna.

The calibration radio 71 converts a format of signals from the probe 73 to a digital base-band format so that they can be understood and can be processed by the common module 13. The calibration radio 71 can also communicate with antenna element radios for performing signal phase measurements.

The RF loop provides a cross-band repeater means. The cross-band repeater means enables the calibration radio 71 to act like a mobile phone radio that receives signals in the TX band of the BTS and transmits signals in the RX band of the BTS.

In a UL transfer, the cross-band repeater means converts a signal in the TX band to a signal in the RX band. This enables a UL calibration wherein the calibration radio 71 transmits a reception calibration signal in the RX band to the probe 73 for sending to the BTS antenna.

Similarly, in a DL transfer, the cross-band repeater means also converts a signal in the RX band to a signal in the TX band. This allows for a DL (downlink) calibration wherein the calibration radio 71 receives a transmission calibration signal in the TX signal band.

The calibration radio 71 can be made using a mobile phone technology or using similar technology that enables direct cross-band repeater functionality. For example, the calibration radio 71 can be produced using a BTS radio that includes a RF loop, using a mobile phone radio that is equipped with an appropriate digital interface for communicating with the common module 13, or using a special purpose radio.

The common module 13 detects signal phases for an UL signal and for a DL signal. The common module 13 can also adjust signal phases for the UL signal and the DL signal. Digital algorithms can be used for the adjustment. The adjustment includes changing delays of the UL signal or the DL signal.

The digital serial bus 75 is described in a RP3 (Reference Point 3) document, OBSAI (Open Base Station Architecture Initiative), www.obsai.org. The digital serial bus 75 provides a communication link between the common module 13 and the calibration radio 71.

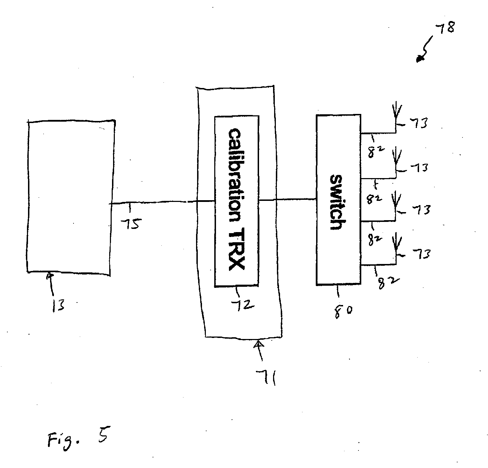

Fig. 5 shows a calibration unit 78. The calibration unit 78 includes the calibration transceiver 72 of Fig. 4.

The calibration transceiver 72 is connected to one terminal of a bidirectional RF (radio frequency) switch 80. Other terminals of the RF switch 80 are connected to multiple probes 73 via a plurality of RF feed lines 82. The RF feed lines 82 include thin coaxial cables. The calibration transceiver 72 is also connected to the common module 13 of Fig. 4.

Advantageously, the calibration unit 78 is produced with the probes 73 and with the RF feed lines 82, both of which are of low cost.

The multiple probes 73 are intended to be placed apart such that each probe 73 is located near one or more antenna-unit pairs. This allows easy measurement of the antenna-unit pairs by the probes 73. The probe 73 may have operating measurement errors if the antenna-unit pair that is assigned to the probe 73 is located far from the probe 73.

In a generic sense, the RF feed lines 82 can also include strip lines. The strip lines can comprise metal strips of a PC (Printed Circuit) board and air-strips of an antenna structure, if a system design of the calibration unit 78 allows it.

Lengths of the feed lines 82 do not affect signal phase difference measurements of the antenna-unit pairs. The feed lines 82 have an appropriate length and are of a reasonable quality. In contrast, a directional coupler calibration usually uses cables that are phase matched such that an error of the cables in electrical length is less than 1 mm (millimetre). Thus, a use of the feed lines 82 can improve test equipment quality and can enable a lower phase test-equipment cost.

The RF switch 80 selectively connects the calibration transceiver 72 to one of the multiple probes 73. The control module 13 controls the selection. A transmission power level of the RF switch 80 is low and a loss of a few dBs (decibels) of power at the RF switch 80 can be tolerated since the calibration transceiver 72 does not have a link power-budget constraint. Thus, the RF switch 80 is easy to produce and is of low cost.

The calibration transceiver 72 can measure far antenna-unit pairs. The calibration transceiver 72 and the RF switch 80 can also support the probes 32 and 33 of Fig. 2.

In short, at least three antenna-units can form a phase measurement set. The at least three antenna-units can be arranged in a vertical line or in a horizontal line.

For example, a phase measurement set can comprise a first probe that is placed between a first antenna-unit and a second antenna-unit, wherein the first antenna-unit and the second antenna-unit are symmetrical about the first probe. A second probe is placed between the second antenna-unit and the third antenna-unit, wherein the second antenna-unit and the third antenna-unit are symmetrical about the second probe.

The correctly phased antenna elements can be employed in beam forming. A beam-former shapes a beam of the antenna elements by weighting or changing phase angles and amplitudes of signals that are transmitted by the different antenna elements in a way that a direction of the beam is adapted to move along with the UE throughout a sector that is covered by the antenna elements. Each antenna elements can have different signal phases and signal amplitudes to form the beam.

Locations of UEs change over time. The correctly phased antenna elements can adapt to the changing locations through beam. In this manner, the correctly phased antenna elements are able offer high efficient.

List of abbreviations

| | |
|---|---|
| BTS | base transceiver station |
| CN | Core Network |
| DL | down-link |
| EIRP | effective isotropic radiated power |
| GSM | Global System for Mobile communication |
| LTE | Long Term Evolution |
| MS | Mobile Station |
| OBSAI | Open Base Station Architecture Initiative |
| PC board | printed circuit board |
| RF | radio frequency |
| RP3 | Reference Point 3 |
| RX | receiver |
| TX | transmitter |
| UE | User Equipment |
| UL | up-link |
| WCDMA | Wideband Code Division Multiple Access |

Reference numbers

**[0195]**

| | |
|---|---|
| 10 | single-column antenna array |
| 11 | first probe |
| 12 | second probe |
| 13 | common module |
| 15 | first antenna sub-array |
| 16 | second antenna sub-array |
| 17 | third antenna sub-array |
| 18 | fourth antenna sub-array |
| 19 | fifth antenna sub-array |
| 22 | antenna |
| 23 | first group |
| 24 | second group |

| | |
|---|---|
| 25 | third group |
| 26 | fourth group |
| 30 | two-column antenna array |
| 32 | first probe |
| 33 | second probe |
| 37 | antenna sub-array |
| 39 | antenna sub-array |
| 41 | antenna sub-array |
| 43 | antenna sub-array |
| 45 | antenna sub-array |
| 50 | three-column antenna array |
| 51 | first horizontal pair |
| 52 | second horizontal pair |
| 53 | first vertical pair |
| 54 | second vertical pair |
| 55 | antenna sub-array |
| 56 | antenna sub-array |
| 57 | antenna sub-array |
| 58 | antenna sub-array |
| 59 | antenna sub-array |
| 62 | probe |
| 63 | probe |
| 65 | probe |
| 66 | probe |
| 67 | column |
| 68 | column |
| 69 | column |
| 70 | calibration unit |
| 71 | calibration radio |
| 72 | calibration transceiver |
| 73 | probe |
| 75 | digital serial bus |
| 78 | calibration unit |
| 80 | RF (radio frequency) switch |
| 82 | RF feed lines |
| ERPD15-18 | electromagnetic radiation signal phase of the antenna sub-array 15 with respect to electromagnetic radiation signal of the antenna sub-array 18 |
| ERPD15-19 | electromagnetic radiation signal phase of the antenna sub-array 15 with respective to electromagnetic radiation signal of the antenna sub-array 19 |
| ERPD16_17 | electromagnetic radiation signal phase of the antenna sub-array 16 with respect to electromagnetic radiation signal of the antenna sub-array 17 |
| ERPD16_19 | electromagnetic radiation signal phase of the antenna sub-array 16 with respect to electromagnetic radiation signal of the antenna sub-array 19 |
| ERPD17_16 | electromagnetic radiation signal phase of the antenna sub-array 17 with respect to electromagnetic radiation signal of the antenna sub-array 16 |
| ERPD17_18 | electromagnetic radiation signal phase of the antenna sub-array 17 with respect to electromagnetic radiation signal of the antenna sub-array 18 |
| ERPD17_19 | electromagnetic radiation signal phase of the antenna sub-array 17 with respect to electromagnetic radiation signal of the antenna sub-array 19 |
| ERPD18_17 | electromagnetic radiation signal phase of the antenna sub-array 18 with respect to electromagnetic radiation signal of to the antenna sub-array 17 |
| ERPD18_19 | electromagnetic radiation signal phase of the antenna sub-array 18 with respect to electromagnetic radiation signal of the antenna sub-array 19 |
| RFPD15_18 | RF signal phase of the antenna sub-array 15 with respect to RF signal of the antenna sub-array 18 |
| RFPD16_19 | RF signal phase of the antenna sub-array 16 with respect to RF signal of the antenna sub-array 19 |
| RFPD17_16 | RF signal phase of the antenna sub-array 17 with respect to RF signal of the antenna sub-array 16 |
| RFPD18_17 | RF signal phase of the antenna sub-array 18 with respect to RF signal of the antenna sub-array 17 |

**Claims**

1. An antenna array device (10) that comprises

   - at least three antenna elements (15, 16, 17, 18, 19),

   wherein the antenna elements (15, 16, 17, 18, 19) being grouped into at least two antenna element pairs (23, 24, 25, 26),
   the antenna element pairs (23, 24, 25, 26) being arranged essentially symmetrical about one of at least two phase probes (11, 12),
   at least one antenna element (15, 16, 17, 18, 19) of the antenna element pair (23, 24, 25, 26) being part of at least another antenna element pair (23, 24, 25, 26),

   - at least one receiver (71) being communicatively connected to the phase probes (11, 12),
   - at least one transmitter being communicatively connected to the antenna elements (15, 16, 17, 18, 19), and
   - a phase measurement device being provided with the receiver (71) for determining phase differences of the antenna element pairs (23, 24, 25, 26).

2. An antenna array device (10) of claim 1
   **characterised in that**
   the antenna array device (10) further comprises
   a memory device for storing antenna element phase differences.

3. An antenna array device (10) of claim 1 or 2
   **characterised in that**
   the antenna array device (10) further comprises
   a switch (80) that selectively connects the phase probes (11, 12) to the receiver (71).

4. An antenna array device (10) that comprises

   - at least three antenna elements (15, 16, 17, 18, 19),

   wherein the antenna elements (15, 16, 17, 18, 19) being grouped into at least two antenna element pairs (23, 24, 25, 26),
   the antenna element pairs (23, 24, 25, 26) being arranged essentially symmetrical about one of at least two phase probes (11, 12),
   at least one antenna element (15, 16, 17, 18, 19) of the antenna element pair (23, 24, 25, 26) being part of at least another antenna element pair (23, 24, 25, 26),

   - at least one transmitter being communicatively connected to the antenna elements (15, 16, 17, 18, 19),
   - a phase adjustment device being communicatively connected to the at least one transmitter, and
   - a memory device being provided for storing antenna element phase differences.

5. An antenna array device (10) of claim 4
   **characterised in that**
   the antenna array device(10) further comprises
   at least one receiver (71) that is communicatively connected to the phase probes (11, 12).

6. An antenna array device (10) of claim 5
   **characterised in that**
   the antenna array device (10) further comprises
   a switch (80) that selectively connects the phase probes (11, 12) to the receiver (71).

7. An antenna array device (10) of one of claims 5 to 6
   **characterised in that**
   the antenna array device (10) further comprises
   a phase measurement device being provided with the receiver (71) for determining phase differences of the antenna element pairs (23, 24, 25, 26).

8. A BTS (Base Transceiver Station) of a communication network that comprises an antenna array device (10) according to one of the claims 1 to 7.

9. A method for measuring signal phase differences of antenna elements of an antenna array device (10), the method comprising the steps of
   providing a first antenna element (16) and a second antenna element (17) essentially symmetrical about a first phase probe (11),
   providing a third antenna element (18) and a second phase probe (12) such that the second antenna element (17) and the third antenna element (18) are provided essentially symmetrical about the second phase probe (12),
   emitting a first pair signal via the first antenna element (16) and via the second antenna element (17),
   receiving the first antenna element first pair signal via the first phase probe (11) and the second antenna element first pair signal via the first phase probe (11),
   measuring a first pair transmission phase difference between the first antenna element first pair signal and the second antenna element first pair signal,
   emitting a second pair signal via the second antenna element (17) and via the third antenna element (18),
   receiving the second antenna element second pair signal via the second phase probe (12) and the third antenna element second pair signal via the second phase probe (12), and
   measuring a second pair transmission phase difference between the second antenna element second pair signal and the third antenna element second pair signal.

10. A method of claim 9
    **characterised in that**
    the method further comprises the step of
    calculating a second antenna element characteristic signal phase using the first pair transmission phase difference.

11. A method of claim 10
    **characterised in that**
    the method further comprises the step of
    storing the second antenna element characteristic signal phase in a memory device.

12. A method of one of claims 9 to 11
    **characterised in that**
    the method further comprises the step of
    calculating a third antenna element characteristic signal phase using the first pair transmission phase difference and the second pair transmission phase difference.

13. A method of claim 12
    **characterised in that**
    the method further comprises the step of
    storing the third antenna element characteristic signal phase in the memory device.

14. A method of claim 10 and 12
    **characterised in that**
    the method further comprises the step of
    emitting a first signal via a first antenna element,
    emitting a second calibrated signal via a second antenna element, the second calibrated signal comprises a second signal that is phase adjusted using the second antenna element characteristic signal phase, and
    emitting a third calibrated signal via the third antenna element, the third calibrated signal comprises a third signal that is phase adjusted using the third antenna element characteristic signal phase.

15. A method of claim 10 and 12
    **characterised in that**
    the method further comprises the step of
    emitting a first signal via a first antenna element,
    emitting a second desired signal via the second antenna element, the second desired signal comprises a second signal that is phase adjusted using the second antenna element characteristic signal phase and a second antenna element desired signal phase, and
    emitting a third desired signal via the third antenna element, the third desired signal comprises a third signal that is phase adjusted using a third antenna element characteristic signal phase and a third antenna element desired signal phase.

Fig. 1

Fig. 2

Fig. 3

EP 2 173 010 A1

Fig. 4

78

calibration TRX

72

71

switch

80

73

82

73

82

73

82

73

82

15

13

Fig. 5

Europäisches
Patentamt

European
Patent Office

Office européen
des brevets

# EUROPEAN SEARCH REPORT

Application Number

EP 08 10 5478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/061644 A1 (LIER ERIK [US] ET AL) 1 April 2004 (2004-04-01) * abstract * * figures 2-4 * * paragraphs [0001] - [0055] * ----- | 1-8 | INV. H01Q3/26 H01Q1/24 G01S7/40 H04B17/00 |
| X | US 5 657 023 A (LEWIS GIB F [US] ET AL) 12 August 1997 (1997-08-12) * abstract * * figures 2,3 * * column 1, line 1 - column 4, line 58 * ----- | 9-15 | |
| A | EP 1 670 095 A (LOCKHEED CORP [US]) 14 June 2006 (2006-06-14) * abstract * * figures 1-6 * * paragraphs [0001] - [0039] * ----- | 1-15 | |
| A | US 2008/129613 A1 (ERMUTLU MURAT EMRE [FI] ET AL) 5 June 2008 (2008-06-05) * abstract * * figures 2,5,8,18 * * paragraphs [0001] - [0017], [0033] - [0063] * ----- | 1-15 | TECHNICAL FIELDS SEARCHED (IPC) H01Q G01S H04B |
| A | EP 1 104 122 A (SANYO ELECTRIC CO [JP]) 30 May 2001 (2001-05-30) * the whole document * ----- | 1-15 | |
| A | EP 1 830 486 A (FUJITSU LTD [JP]) 5 September 2007 (2007-09-05) * the whole document * ----- | 1-15 | |

The present search report has been drawn up for all claims

| Place of search | Date of completion of the search | Examiner |
|---|---|---|
| The Hague | 5 March 2009 | Hüschelrath, Jens |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 2 173 010 A1

**ANNEX TO THE EUROPEAN SEARCH REPORT
ON EUROPEAN PATENT APPLICATION NO.**

EP 08 10 5478

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2009

| Patent document cited in search report | | Publication date | Patent family member(s) | | Publication date |
|---|---|---|---|---|---|
| US 2004061644 | A1 | 01-04-2004 | NONE | | |
| US 5657023 | A | 12-08-1997 | AU | 683821 B1 | 20-11-1997 |
| | | | CA | 2203965 A1 | 02-11-1997 |
| | | | DE | 69701165 D1 | 24-02-2000 |
| | | | DE | 69701165 T2 | 14-09-2000 |
| | | | EP | 0805514 A2 | 05-11-1997 |
| | | | ES | 2141557 T3 | 16-03-2000 |
| | | | JP | 3215652 B2 | 09-10-2001 |
| | | | JP | 10068751 A | 10-03-1998 |
| EP 1670095 | A | 14-06-2006 | US | 2006119511 A1 | 08-06-2006 |
| US 2008129613 | A1 | 05-06-2008 | NONE | | |
| EP 1104122 | A | 30-05-2001 | AU | 757396 B2 | 20-02-2003 |
| | | | AU | 4933599 A | 28-02-2000 |
| | | | CN | 1322414 A | 14-11-2001 |
| | | | DE | 69936210 T2 | 17-01-2008 |
| | | | HK | 1042603 A1 | 18-02-2005 |
| | | | ID | 27970 A | 03-05-2001 |
| | | | WO | 0008777 A1 | 17-02-2000 |
| | | | JP | 3332911 B2 | 07-10-2002 |
| | | | US | 6870878 B1 | 22-03-2005 |
| EP 1830486 | A | 05-09-2007 | EP | 1940047 A1 | 02-07-2008 |

EPO FORM P0459

For more details about this annex : see Official Journal of the European Patent Office, No. 12/82

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 465971 A, Thomas Edison